Europäisches Patentamt

European Patent Office

Office européen des brevets

(11) Veröffentlichungsnummer: **0 392 013**
**A1**

(12) **EUROPÄISCHE PATENTANMELDUNG**
veröffentlicht nach Art. 158 Abs. 3
EPÜ

(21) Anmeldenummer: 89900373.5

(22) Anmeldetag: 25.10.88

(86) Internationale Anmeldenummer:
PCT/SU88/00209

(87) Internationale Veröffentlichungsnummer:
WO 90/04726 (03.05.90 90/10)

(51) Int. Cl.5: **F16C 19/54**

(43) Veröffentlichungstag der Anmeldung:
17.10.90 Patentblatt 90/42

(84) Benannte Vertragsstaaten:
AT BE DE FR GB IT NL SE

(71) Anmelder: NAUCHNO-PROIZVODSTVENNOE OBIEDINENIE PO MEKHANIZATSII, ROBOTIZATSII TRUDA I SOVERSHENSTVOVANIJU REMONTNOGO OBESPECHENIA NA PREDPRIYATIYAKH CHERNOI METALLURGII NPO 'CHERMETMEKHANIZATSIA'
pr. K. Marxa 65 Dnepropetrovsk, 320600(SU)

(72) Erfinder: KLIMKOVSKY, Bronislav Mecheslavovich
ul. Akademika Lazariana, 1-12
Dnepropetrovsk, 320010(SU)
Erfinder: PATSER, Alexandr Ivanovich
ul. Naberezhnaya Pobedy, 1082-44
Dnepropetrovsk, 320094(SU)
Erfinder: POTAPOV, Nikolai Mikhailovich
ul. Vatchenko, 61-231
Dnepropetrovsk, 320087(SU)
Erfinder: PASALSKY, Vladimir Miloslavovich
ul. Vatchenko, 80-202
Dnepropetrovsk, 320087(SU)
Erfinder: ANOFRIEV, Pavel Grigorievich
Zaporozhskoe shosse, 72-116
Dnepropetrovsk, 320041(SU)

(74) Vertreter: Nix, Frank Arnold, Dr.
Kröckelbergstrasse 15
D-6200 Wiesbaden(DE)

(54) **LAGER FÜR SENKRECHTE STÜTZE.**

(57) Die Lagereinheit enthält ein Gehäuse (I), Wälzlager (3), die zwischen Aussenringen (5) und Innenringen (4) untergebracht sind, sowie ein System (A) zum Ausgleich von Belastungen. Das System (A) zum Ausgleich von Belastungen enthält elastische Elemente (7), die sich zwischen den Aussenringen

(5) befinden, starre Abstandshülsen (6), die zwischen den Innenringen (4) angeordnet sind, und Verbindungsglieder (8), welche miteinander und mit den elastischen Elementen (7) über Trennungsflansche (9) zusammenwirken.

FIG. 1

# LAGEREINHEIT FÜR VERTIKALE STÜTZEN

## Technisches Gebiet

Die vorliegende Erfindung bezieht sich auf das Gebiet des Maschinenbaus, insbesondere betrifft sie eine Lagereinheit für vertikale Stützen und kann für hochbeanspruchte senkrechte Hochgeschwindigkeitswellen beispielsweise in der Konstruktion von Vertikalschleudergussmaschinen, Bohranlagen und Generatoren angewandt werden.

## Zugrundeliegender Stand der Technik

Bei den zur Zeit existierenden Konstruktionen von Lagereinheiten sind die Lager auf einer Welle aufeinanderfolgend angeordnet und durch starre Buchsen getrennt. Dies führt zu einer umgleichmässigen Belastung der Lager, was die Lebensdauer der gesamten Lagereinheit herabsetzt.

Nächstliegend nach dem technischen Wesen und dem erzielbaren Resultat ist eine Lagereinheit für vertikale Stützen, die in einem Gehäuse mit einem Radialspalt übereinander angeordnete Wälzlager enthält, von denen jedes durch Wälzkörper gebildet ist, welche zwischen Innen- und Aussenringen untergebracht sind, sowie ein System zum Ausgleich von Belastungen zwischen den Wälzlagern besitzt (SU, A, Nr. 681250, 509732).

In der Lagereinheit ist das System zum Ausgleich von Belastungen durch elastische Elemente in Form von Tellerfedern oder anders gestalteten Federn gebildet, die sich zwischen den Innen- und Aussenringen der Lager befinden und miteinander nicht verbunden sind. Dies führt dazu, dass bei einer Belastung der Lagereinheit die Kräfte aufeinanderfolgend von Lager zu Lager übertragen werden. Als Ergebnis sind alle Lager durch die ursprünglich wirkende Kraft belastet. Somit wird bei einer solchen Lagereinheit die Belastung nicht gleichmässig zwischen den Lagern verteilt. Dies setzt die Lebensdauer der Lagereinheit besonders bei hohen Geschwindigkeiten und Belastungen herab.

## Offenbarung der Erfindung

Der vorliegenden Erfindung liegt die Aufgabe zu-

grunde, eine Lagereinheit für vertikale Stützen zu schaffen, bei der die konstruktive Ausführung des Systems zum Ausgleich von Belastungen eine gleichmässige Verteilung der Belastung zwischen den Lagern sicherstellen würde, was die Lebensdauer und die Zuverlässigkeit der gesamten Lagereinheit zu erhöhen erlaubt.

Die gestellte Aufgabe wird dadurch gelöst, dass in der Lagereinheit für vertikale Stützen, enthaltend in einem Gehäuse mit einem Radialspalt übereinander angeordnete Wälzlager, in jedem von denen die Wälzkörper zwischen Innen- und Aussenringen untergebracht sind, sowie ein System zum Ausgleich von Belastungen zwischen den Wälzlagern, welches elastische Elemente besitzt, die sich zwischen den einen von den gleichnamigen Ringen befinden, erfindungsgemäss das System zum Ausgleich von Belastungen starre Abstandshülsen, die zwischen den anderen von den gleichnamigen Ringen der benachbarten Wälzlager angeordnet sind, Trennungsflansche, die zwischen den mit den elastischen Elementen kontaktierenden gleichnamigen Ringen unter Bildung eines Axialspaltes zwischen ihnen untergebracht sind, und Verbindungselemente enthält, welche miteinander und mit den elastischen Elementen über die Trennungsflansche zusammenwirken.

Die Einführung der Trennungsflansche und Verbindungsglieder unter gleichzeitiger Bildung von Axialspalten zwischen den einen von den gleichnamigen Lagern gestattet es, alle Lager gleichzeitig zu belasten, was zur Verteilung der Belastung zwischen den Lagern führt, wobei die auf ein Lager entfallende Belastung zur Lagerzahl umgekehrt proportional ist.

Es ist zweckmässig, die Verbindungsglieder in Form von Buchsen auszubilden, deren jede einen inneren Ringbund aufweist, der einen Trennungsflansch bildet, und diese Buchsen längs des Gehäuses verschiebbar anzuordnen, die elastischen Elemente aber in Form von Zwischenlagen auszuführen, was es erlaubt, die Konstruktion der Lagereinheit zu vereinfachen.

- 3 -

Die elastischen Elemente und die Verbindungsglieder kann man in Gestalt von hohlen Kammern ausbilden, die miteinander in Verbindung stehen und mit Druckgas gefüllt sind, und die Trennungsflansche im Gehäuse starr befestigen.

Dadurch wird es möglich, eine niedrige Eigenfrequenz der Lagereinheit sicherzustellen, ihre Dämpfungsfähigkeit zu erhöhen, was letzten Endes die Belastungen in der Lagereinheit herabmindert und die Lebensdauer derselben erhöht.

Entsprechend dieser Ausführungsvariante der Lagereinheit für vertikale Stützen besitzt diese Einheit einen Steuerblock zur Steuerung der Arbeit der hohlen Kammern, welcher eine Druckquelle, Hochdruck- und Niederdruckgefässe und eine Rückführungsleitung umfasst, wobei die Hochdruck- und Niederdruckgefässe mit den hohlen Kammern, der Druckquelle und der Rückführungsleitung verbunden sind.

Diese Ausführung bietet die Möglichkeit, je nach der Umlaufgeschwindigkeit der Stütze ihre Eigenfrequenz sprungartig zu verändern, was die Schwingungsamplitude der Stütze im Zustand der Beschleunigung und Bremsung, d.h. bei Resonanzbetriebsweisen, stark verkleinert.

Kurze Beschreibung der Zeichnungen

Im folgenden wird die Erfindung durch eingehende Beschreibung von Ausführungsbeispielen derselben unter Hinweisen auf beigefügte Zeichnungen erläutert; in diesen zeigt:

Fig. I die Gesamtansicht der erfindungsgemässen Lagereinheit im Schnitt;

Fig. 2 eine andere Ausführungsform derselben;

Fig. 3 grafische Darstellung der Amplitudenfrequenzkennlinie der Stütze;

Fig. 4 grafische Darstellung der Kraftkennlinie der Stütze.

Beste Ausführungsformen der Erfindung

Die Lagereinheit für vertikale Stützen enthält in einem Gehäuse I (Fig. I, 2) mit einem Radialspalt 2 übereinander angeordnete Wälzlager, von denen jedes durch

- 4 -

Wälzkörper 3 gebildet ist, die zwischen Innenringen 4 und Aussenringen 5 untergebracht sind, sowie ein System A zum Ausgleich von Belastungen. Die Grösse des Spaltes 2 wird durch die Maße eines üblichen Lauf- oder Gleitsitzes bestimmt.

Das System A zum Ausgleich von Belastungen enthält starre Abstandshülsen 6, die zwischen den gleichnamigen Innenringen 4 der benachbarten Wälzlager angeordnet sind, elastische Elemente 7, welche mit den Aussenringen 5 kontaktieren, Verbindungsglieder 8 und Trennungsflansche 9, die zwischen den Aussenringen 5 unter Bildung eines Axialspaltes IO untergebracht sind. Die Verbindungsglieder 8 wirken miteinander und mit den elastischen Elementen 7 über die Trennungsflansche 9 zusammen.

Die Innenringe 4 der Lager und die starren Abstandshülsen 6 sind auf eine Welle II aufgesetzt und gegen axiale Verschiebung beispielsweise durch Bunde I2 und I3 der Welle II gesichert sind.

Die Verbindungsglieder 8 können eine verschiedene Konstruktion haben, die von der Drehzahl der Welle II, der Art und Grösse der Belastung abhängt. So ist entsprechend Fig. I jedes Verbindungsglied 8 in Form einer Buchse I4 ausgebildet, die einen inneren Bund aufweist, welcher den Trennungsflansch 9 bildet. Die Buchsen I4 stützen sich aufeinander ab und sind längs des Gehäuses I unter der Wirkung einer angreifenden Belastung Q verschiebbar. Hierbei ist jedes elastische Element 7 in Form von gleichen Zwischenlagen z.B. aus Gummi oder einem beliebigen anderen elastischen Material ausgeführt und befindet sich zwischen dem Trennungsflansch 9 und dem Aussenring 5. Zwischen jedem Trennungsflansch 9 und dem Aussenring 5 des benachbarten Lagers ist ein Axialspalt IO gebildet.

Der Betrieb der Lagereinheit einer solchen Bauart geht folgendermassen vor sich.

Die Axialbelastung Q wird an die Lagereinheit in der durch einen Pfeil angedeuteten Richtung angelegt.

- 5 -

Während des Umlaufs der Welle II wird die Belastung Q über die Trennungsflansche 9, die Buchsen I4 und die elastischen Elemente 7 gleichzeitig auf alle Aussenringe 5 der Wälzlager übertragen. Hierbei werden die elastischen Elemente 7 zusammengedrückt, und die Buchsen I4 mit den Trennungsflanschen 9 verschieben sich längs des Gehäuses im Radialspalt 2, während die Aussenringe 5 sich in den Axialspalten IO verlagern und dadurch die Herstellungsfehler der Wälzlager und ihre elastischen Verformungen kompensieren. Da alle elastischen Elemente 7 gleich sind und der Betrag ihrer elastischen Verformungen bedeutend grösser ist als die Grössen der Herstellungsfehler der Wälzlager und ihrer elastischen Verformungen, so werden alle Lager gleichzeitig durch gleiche Kräfte belastet, die um so viele Male vermindert sind, wieviel Lager die Lagereinheit beinhaltet.

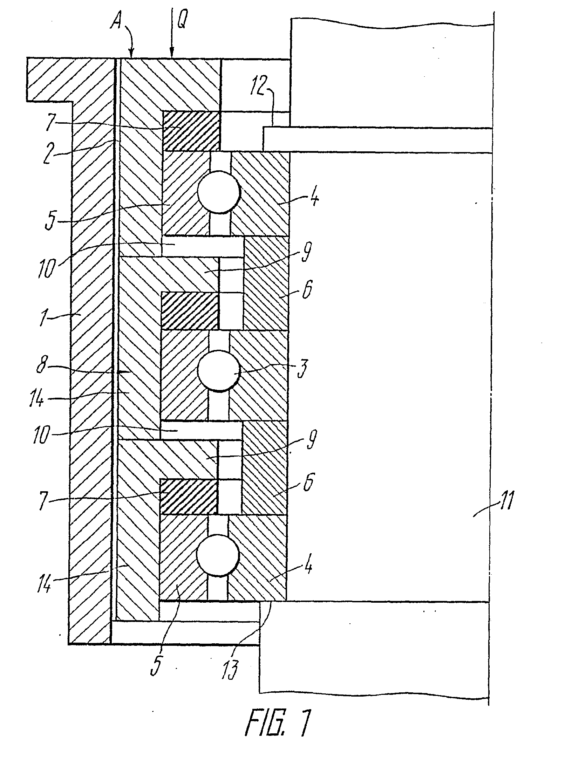

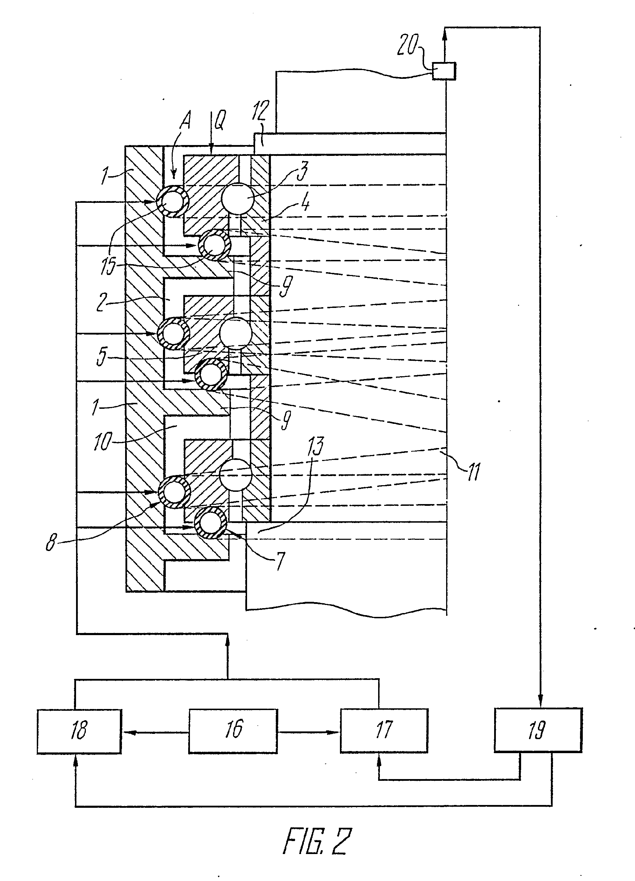

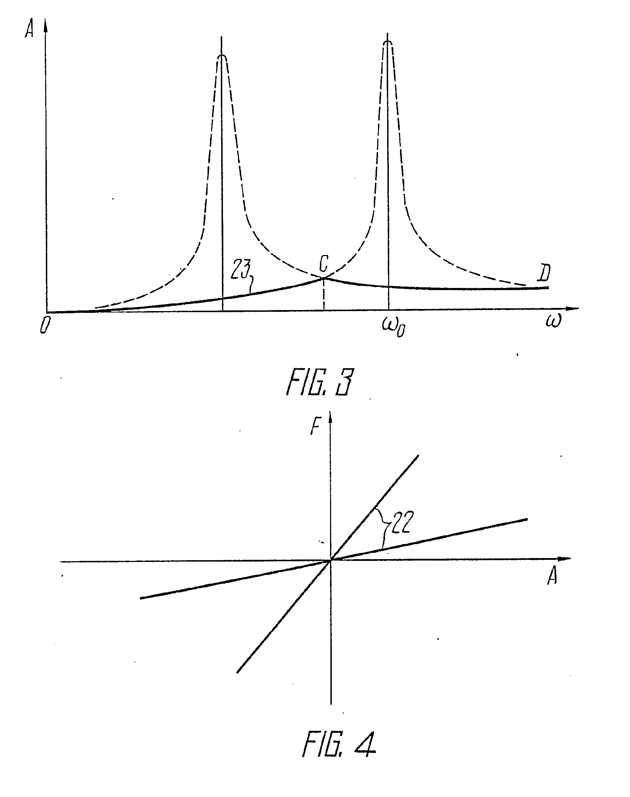

Entsprechend einer anderen Ausführungsform der Lagereinheit sind die elastischen Elemente 7 und die Verbindungsglieder 8 in Form von hohlen Kammern I5 (Fig.2) ausgebildet, die miteinander in Verbindung stehen und mit Druckgas gefüllt sind. Als hohle Kammern I5 kann ein flexibler Druckluftschlauch verwendet werden, der längs einer Schraubenlinie über die gesamte Lagereinheit verlegt und so angeordnet ist, wie dies in Fig. 2 gezeigt ist, d.h., in jedem Lager befindet sich eine Windung des Druckluftschlauchs, welche das Verbindungsglied 8 darstellt, im Spalt 2 zwischen dem Gehäuse I und dem Aussenring 5, während die andere Windung, welche das elastische Element 7 darstellt, zwischen dem Aussenring 5 und dem horizontalen Flansch 9 untergebracht ist.

Die Trennungsflansche 9 sind bei dieser Ausführungsvariante im Gehäuse I auf dessen Innenseite starr befestigt. Zur Steuerung der Arbeit der Kammern I5 ist in der Lagereinheit ein Steuerblock vorgesehen, der aus bekannten Baugruppen und -elementen gebildete: eine Druckquelle I6, Druckgefässe I7 und I8 jeweils für Hoch- und Niederdruck, eine Rückführungsleitung I9

- 6 -

und einen Geber 20 für die Drehzahl der Welle II umfasst.
Dabei sind die Ausgänge der Druckgefässe 17 und 18
jeweils für den Hoch- und Niederdruck mit den hohlen
Kammern 15 verbunden, die Ausgänge der Druckquelle 16
sind mit den Eingängen der Druckgefässe 17 und 18 verbunden, während die Rückführungsleitung 19 über ihren
Eingang mit dem Drehzahlgeber 20, über ihre Ausgänge
aber mit den Druckgefässen 17 und 18 verbunden ist.

Die Lagereinheit einer solchen Bauart arbeitet wie
folgt.

Im Anfang wird im Druckgefäss 17 ein niedriger Druck aufrechterhalten, der um das Zehn- bis Fünfzehnfache kleiner ist als der hohe Druck im Druckgefäss
18. Während des Umlaufs der Welle II wird die Belastung
Q über die hohlen Kammern 15 gleichzeitig zu allen
Lagern der Lagereinheit übertragen. Da die hohlen Kammern 15 miteinander verbunden sind und an ein und dasselbe Druckgefäss angeschlossen sind, ist der Druck in
jeder von ihnen gleich, was zur gleichzeitigen Verteilung der Belastung auf alle Lager führt, wie dies oben
beschrieben wurde.

Das Hochdruckgefäss 18 wird an die hohlen Kammern 15
bei einer Geschwindigkeit der Welle II $\omega < \omega_0 \sqrt{\frac{1 + K}{2}}$
angeschlossen, worin $\omega_0$ die Eigenfrequenz des Systems
bei an die hohlen Kammern angeschlossenem Hochdruckgefäss und K das Verhältnis des Drucks im Niederdruckgefäss zum Druck im Hochdruckgefäss bedeuten. Ist
$\omega < \omega_0 \sqrt{\frac{1 + K}{2}}$, so wird das Hochdruckgefäss über die
Rückführungsleitung abgeschaltet und das Niederdruckgefäss angeschlossen.

Die Verminderung der dynamischen Beanspruchung der
Lagereinheit wird an einer Amplitudenfrequenzkennlinie
(Fig. 3) und einer Kraftkennlinie (Fig. 4) veranschaulicht. Aus den Kennlinien ist erkennbar, dass beim
Anlaufen der Stütze mit der Zunahme ihrer Winkelgeschwindigkeit $\omega$ die Fliehkraft F (Linie 22 in
Fig. 4) und die Schwingungsamplitude A (Linie 23 in
Fig. 3) anwachsen. Dieser Betriebszustand ist durch

- 7 -

den Ast OC der Linie 23 der Amplitudenfrequenzkennlinie wiedergegeben. Erreicht die Welle II eine Geschwindigkeit $W > W_o \sqrt{\frac{I + K}{2}}$, so findet die Umschaltung der Hohlräume der hohlen Kammern I5 vom Hochdruckgefäss I7 auf das Niederdruckgefäss I8 statt. Bei der weiteren Vergrösserung der Umlaufgeschwindigkeit der Welle nimmt die Schwingungsamplitude A der Stütze gemäss dem Abschnitt CD der Linie 23 ab. Im Bremsbetrieb, d.h. bei der Verminderung der Winkelgeschwindigkeit $W$, wächst die Schwingungsamplitude A gemäss dem Abschnitt DC bis zur Umschaltung von dem Niederdruckgefäss auf das Hochdruckgefäss an, was bei einer Geschwindigkeit $W = W_o \sqrt{\frac{I + K}{2}}$ geschieht, und hiernach erfolgt die weitere Verminderung der Geschwindigkeit und der Schwingungsamplitude der Welle gemäss dem Abschnitt CO.

Auf diese Weise wird durch die Umschaltung der Druckgefässe im Beschleunigungs- und Bremsbetrieb der Welle die Schwingungsamplitude der Stützen durch den Punkt C auf der Amplitudenfrequenzkennlinie begrenzt.

Die Begrenzung der Schwingungsamplituden der Stützen trägt zur Verminderung der dynamischen Beanspruchung und folglich zur Erhöhung der Zuverlässigkeit der Stützen bei.

### Gewerbliche Verwertbarkeit

Die Lagereinheit wird für hochbeanspruchte senkrechte Hochgeschwindigkeitswellen in Schleudergussmaschinen, Bohranlagen und Generatoren verwendet.

- 8 -

PATENTANSPRÜCHE:

I. Lagereinheit für vertikale Stützen, enthaltend in einem Gehäuse (I) mit einem Radialspalt (2) übereinander angeordnete Wälzlager, in jedem von denen die Wälzkörper (3) zwischen einem Innenring (1) und einem Aussenring (5) untergebracht sind, sowie ein System (A) zum Ausgleich von Belastungen zwischen den Wälzlagern, welches elastische Elemente (7) besitzt, die sich zwischen den einen von den gleichnamigen Ringen (5) befinden, dadurch g e k e n n z e i c h n e t, dass das System (A) zum Ausgleich von Belastungen starre Abstandshülsen (6), die zwischen den anderen von den gleichnamigen Ringen (1) der benachbarten Wälzlager (3) angeordnet sind, Trennungsflansche (9), die zwischen den mit den elastischen Elementen kontaktierenden gleichnamigen Ringen (5) unter Bildung eines Axialspaltes (IO) zwischen ihnen untergebracht sind, und Verbindungsglieder (8) enthält, welche miteinander und mit den elastischen Elementen (7) über die Trennungsflansche (9) zusammenwirken.

2. Lagereinheit nach Anspruch I, dadurch g e k e n n z e i c h n e t, dass die Verbindungsglieder (8) in Form von Buchsen (I4) ausgebildet sind, von denen jede einen inneren Ringbund aufweist, der einen Trennungsflansch (9) bildet, welche Buchsen längs des Gehäuses (I) verschiebbar angeordnet sind, wobei die elastischen Elemente (7) in Form von Zwischenlagen ausgeführt sind.

3. Lagereinheit nach Anspruch I, dadurch g e k e n n z e i c h n e t, dass die elastischen Elemente (7) und die Verbindungsglieder (8) in Gestalt von hohlen Kammern (I5) ausgebildet sind, die miteinander in Verbindung stehen und mit Druckgas gefüllt sind, wobei die Trennungsflansche (9) im Gehäuse (I) starr befestigt sind.

4. Lagereinheit nach Anspruch 3, dadurch g e k e n n z e i c h n e t, dass sie einen Steuerblock zur

- 9 -

Steuerung der Arbeit der hohlen Kammern (I5) besitzt, welcher eine Druckquelle (I6), Druckgefässe (I7 und I8) jeweils für Hoch- und Niederdruck und eine Rückführungsleitung (I9) umfasst, wobei die Hochdruck- und Niederdruckgefässe (I7 und I8) mit den hohlen Kammern (I5), der Druckquelle (I6) und der Rückführungsleitung (I9) verbunden sind.

FIG. 1

EP 0 392 013 A1

FIG. 2

FIG. 3

FIG. 4

# INTERNATIONAL SEARCH REPORT

International Application No  PCT/SU 88/00209

## I. CLASSIFICATION OF SUBJECT MATTER (if several classification symbols apply, indicate all)

According to International Patent Classification (IPC) or to both National Classification and IPC

IPC$^4$  F 16 C 19/54

## II. FIELDS SEARCHED

### Minimum Documentation Searched

| Classification System | Classification Symbols |
|---|---|
| IPC$^4$ | F 16 C 19/54, 27/00 |

### Documentation Searched other than Minimum Documentation to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | SU, A1, 72872 (M.S. Skvirsky), 07 August 1959 (07.08.59) | 1-4 |
| A | SU, A1, 162005, (M.I. Pilan et al.), 01 April 1964 (01.04.64) | 1-2 |
| A | FR, A5, 2043893, (LA SOCIETE GENERALE DE CONSTRUCTIONS ELECTRIQUES ET MECANIQUES (ALSTHOM) ), 19 February 1971 (19.02.71), see the drawing | 1-2 |
| A | FR, A1, 2393186, (VOITH GETRIEBE KG), 29 December 1978 (29.12.78), see fig. 3, page 5, lines 22-36 | 1-2 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 21 June 1989 (21.06.89) | 19 July 1989 (19.07.89) |

| International Searching Authority | Signature of Authorized Officer |
|---|---|
| ISA/SU | |

Form PCT/ISA/210 (second sheet) (January 1985)